# DEMANDE DE BREVET EUROPEEN

(11) **EP 4 063 114 A1**
(43) Date de publication de la demande: **28.09.2022**
(21) Numéro de dépôt: 22163749.9
(22) Date de dépôt: 23.03.2022
(51) Int. Cl.: B32B 5/16, B32B 5/18, B32B 5/22, B32B 5/24, B32B 5/30, B32B 5/32, B32B 7/022, B32B 7/12, B32B 19/02, B32B 19/04, B32B 19/06, B32B 27/12, B32B 27/40

(54) **ELÉMENT DE GARNISSAGE ET PROCÉDÉ DE FABRICATION ASSOCIÉ**

(30) Priorité: 24.03.2021 FR 2102947
(71) Demandeur: Faurecia Intérieur Industrie, 92000 Nanterre (FR)
(72) Inventeur: QUESNEL, Benjamin, 46015 VALENCIA (ES)
(74) Mandataire: Lavoix

(57) **Abrégé**

Un élément de garnissage de véhicule comprend au moins une couche de revêtement (14) comprenant une couche principale (22) d'une composition comprenant au moins des fibres naturelles (24), un polymère thermoplastique (26) et un agent liant (28).

Les fibres (24) et le polymère thermoplastique (26) sont broyés de sorte à former un ensemble de particules (25) ayant chacune une taille sensiblement comprise entre 0,1 et 3,2 mm. L'ensemble de particules (25) est mélangé et compressé avec l'agent liant (28).

## Description

La présente invention concerne un élément de garnissage de véhicule, en particulier de véhicule automobile, comprenant une couche principale d'une composition comprenant au moins :
- des fibres ;
- un polymère thermoplastique ; et
- un agent liant, ledit agent liant les fibres et le polymère thermoplastique.

L'invention s'applique par exemple à un élément de garnissage formant un panneau de porte, une console centrale ou un habillage de planche de bord d'un véhicule ou d'autres types d'éléments de garnissage.

Généralement, un tel élément de garnissage comprend un support rigide recouvert d'une couche de revêtement lui conférant un aspect extérieur souhaité.

Dans un souci de protection de l'environnement, il est connu de fabriquer les éléments de garnissages avec une haute teneur en matériaux naturels recyclables et/ou issus du recyclage.

Il est ainsi connu de fabriquer les supports rigides en matériau composite comprenant des fibres naturelles. Un procédé de fabrication d'un tel support rigide, dit fabrication en NFPP ("Natural Fiber Polypropylene" pour Propylène comprenant des Fibres naturelles), consiste à compresser un mat constitué de fibres naturelles enchevêtrées avec des fibres de polypropylène. Lors de la compression, le mat va fondre formant une matrice. Les fibres naturelles utilisées lors d'un tel procédé ont une longueur comprise entre 15 et 30 mm.

Cela est différent d'un procédé de fabrication d'un tel support rigide consistant à injecter dans un moule d'injection une matrice de polypropylène sous forme fondue comprenant des fibres naturelles.

Il est également connu de fabriquer une couche de revêtement du support rigide sous forme d'une couche mince de bois formant une surface visible rigide.

Cependant, par exemple, dans le cas d'un élément de garnissage formant un accoudoir, une telle surface rigide pourrait réduire le confort des passagers.

De plus, la fabrication du support rigide en NFPP engendre une grande quantité de résidus non-utilisés de fibres naturelles et de polypropylène.

Un but de l'invention est de proposer un élément de garnissage économique et respectueux de l'environnement comprenant une couche de revêtement souple présentant un aspect extérieur satisfaisant.

A cet effet, l'invention a pour objet un élément de garnissage du type précité, dans lequel les fibres sont des fibres naturelles, les fibres et le polymère thermoplastique étant broyés de sorte à former un ensemble de particules ayant chacune une taille sensiblement comprise entre 0,1 et 3,2 mm, l'ensemble de particules étant mélangé et compressé avec l'agent liant, l'ensemble comprenant les fibres et le polymère thermoplastique représente 10 à 70% de la masse de la couche principale, l'agent liant représente 2 à 90 %, et de préférence 20 à 40%, de la masse de la couche principale.

L'utilisation de fibres naturelles dans la couche de revêtement, par exemple provenant des résidus de fabrication d'un support rigide en NFPP, offre à la fois un avantage économique et à la fois un avantage écologique.

En effet, une telle composition de la couche principale avec moins de 90% d'agent liant et 10 à 70% de fibres et de polymère thermoplastique permet d'assurer les propriétés mécaniques essentielles de la couche principale, tout en optimisant la proportion de fibres naturelles et de polymère thermoplastique, qui sont de préférence biosourcés et/ou recyclés, et ainsi réduire l'impact environnemental de la fabrication de la couche principale.

De plus, le broyage des fibres naturelles et du polymère thermoplastique en particules ayant une faible taille permet de créer une couche de revêtement souple.

En outre, la compression de la couche de revêtement permet de d'obtenir une couche de revêtement à faible épaisseur.

L'élément de garnissage selon l'invention peut comprendre l'une ou plusieurs caractéristiques suivantes, prise(s) isolement ou suivant toute combinaison techniquement possible :
- La couche principale de la couche de revêtement présente une épaisseur sensiblement comprise entre 0,4 et 1,5 mm.
- Les fibres sont des fibres naturelles recyclées.
- L'agent liant est choisi parmi une résine polyuréthane, une résine acrylique et une résine polyoléfine.
- Le polymère thermoplastique est choisi parmi un polymère biosourcé, de préférence un acide polylactique, ou un polymère synthétique, de préférence du polypropylène.
- La couche de revêtement comprend au moins une couche de support ayant une résistance mécanique supérieure à la couche principale.
- La couche de revêtement comprend une couche souple comprenant de la mousse de polyuréthane recyclée mélangée à une résine de polytéréphtalate d'éthylène.
- Il comprend un support rigide, la couche de revêtement recouvrant au moins une partie du support rigide.
- La composition de la couche principale comprend des pigments et/ou des additifs ;
- La couche de revêtement comprend un film de protection s'étendant sur au moins une partie de la couche principale, le film de protection étant en polyuréthane.

L'invention a également pour objet un procédé de fabrication d'un élément de garnissage comprenant les étapes suivantes :
- fourniture de fibres naturelles et d'un polymère thermoplastique ;
- broyage des fibres naturelles et du polymère thermoplastique, de sorte à obtenir un ensemble de particules ayant chacune une taille sensiblement comprise entre 0,1 et 3,2 mm;
- fourniture d'un agent liant sous forme de résine ;
- mélange de l'ensemble de particules avec l'agent liant ; et
- compression de l'ensemble de particules avec l'agent liant afin de former une couche principale d'une couche de revêtement de l'élément de garnissage.

Le procédé de fabrication selon l'invention peut comprendre une étape supplémentaire de fabrication d'une couche souple comprenant les sous-étapes suivantes:
- broyage de résidus de mousse polyuréthane recyclés, de sorte à obtenir des particules de taille inférieure à 12mm, et de préférence inférieure à 5mm ; et
- mélange des particules avec de la résine de polytéréphtalate d'éthylène.

L'invention sera mieux comprise à la lecture de la description qui va suivre, donnée uniquement à titre d'exemple, et faite en se référant aux dessins annexés, sur lesquels :
- [Fig 1] la Figure 1 est une vue schématique d'un élément de garnissage selon l'invention,
- [Fig 2] la Figure 2 est une vue schématique d'une installation mettant en œuvre un premier procédé de fabrication d'une couche principale de l'élément de garnissage de la figure 1,
- [Fig 3] la Figure 3 est une vue schématique d'une installation mettant en œuvre un procédé de fabrication d'une couche souple de l'élément de garnissage de la figure 1,
- [Fig 4] la Figure 4 est une vue schématique d'une installation mettant en œuvre un deuxième procédé de fabrication de la couche principale de l'élément de garnissage de la figure 1, et
- [Fig 5] la Figure 5 est une vue schématique d'une installation mettant en œuvre un troisième procédé de fabrication de la couche principale de l'élément de garnissage de la figure 1.

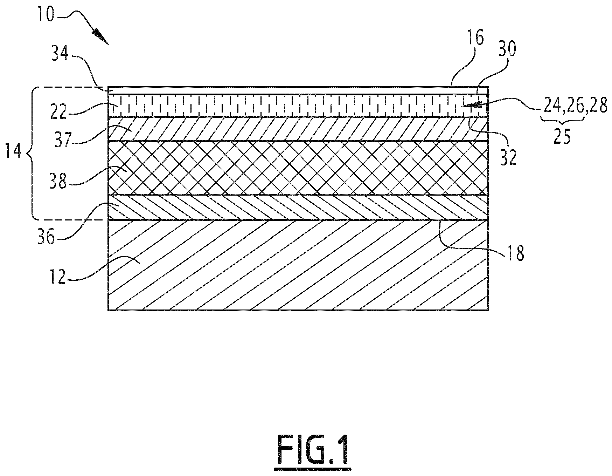

La figure 1 illustre un élément de garnissage 10 de véhicule, en particulier de véhicule automobile. Cette représentation est schématique et les proportions ne sont pas respectées.

L'élément de garnissage 10 est par exemple un panneau de porte, une console centrale ou un habillage de planche de bord d'un véhicule ou autre.

L'élément de garnissage 10 comprend au moins une couche de revêtement 14. Selon un mode de réalisation qui va maintenant être décrit, l'élément de garnissage 10 comprend en outre un support rigide 12.

Le support rigide 12 permet de donner sa forme à l'élément de garnissage 10 et lui confère également une partie de ses propriétés mécaniques, en particulier sa rigidité. Ainsi, le support rigide 12 présente par exemple une forme tridimensionnelle.

Le support rigide 12 est constitué d'un matériau sensiblement rigide, comme un plastique ou un matériau composite. Par conséquent, le support rigide 12 présente une forme stable sensiblement indéformable dans des conditions d'utilisation normales, c'est-à-dire lorsque des contraintes normales au cours de l'utilisation d'un véhicule sont appliquées sur le support.

Par exemple, le support rigide 12 est fabriqué en un matériau thermoplastique comme par exemple un matériau plastique oléfinique ou en polymère thermoplastique acrylonitrile butadiène styrène.

En variante, le support rigide 12 est fabriqué en matériau composite et plus particulièrement en matériau composite comprenant des fibres naturelles. Les fibres naturelles sont par exemple choisies parmi le lin, le chanvre, le kenaf, le coco, le sisal, l'henequen, le jute et/ou le bois.

Le support rigide 12 est par exemple fabriqué selon un procédé de fabrication en NFPP ("Natural Fiber Polypropylene"), c'est-à-dire par compression d'un mat comprenant des fibres naturelles enchevêtrées avec des fibres de polypropylène.

Les fibres naturelles sont alors choisies avec une longueur comprise entre 15 et 30 mm.

En variante, le support rigide 12 est fabriqué par injection dans une moule d'injection d'une matrice de polypropylène sous forme fondue comprenant des fibres naturelles.

La couche de revêtement 14 recouvre au moins une partie du support rigide 12, avantageusement l'intégralité du support rigide 12.

La couche de revêtement 14 est constituée d'un matériau souple présentant préférablement une plus grande souplesse que le support rigide 12.

La couche de revêtement 14 est apte à être déformée élastiquement dans des conditions normales d'utilisation, par exemple lorsqu'un utilisateur prend appui dessus.

Avantageusement, la couche de revêtement 14 épouse la forme du support rigide 12.

La couche de revêtement 14 comprend une surface supérieure 16 formant la surface extérieure de l'élément de garnissage 10 visible depuis l'habitacle du véhicule et une surface inférieure 18 fixée sur le support rigide 12, par exemple par collage.

La couche de revêtement 14 permet de conférer son aspect à l'élément de garnissage 10.

La couche de revêtement 14 comprend une couche principale 22.

La couche principale 22 présente avantageusement une épaisseur, mesurée selon la direction séparant la surface extérieure de la surface intérieure, comprise entre 0,4 mm et 1,5 mm.

La composition de la couche principale 22 comprend des fibres 24, un polymère thermoplastique 26 et un agent liant 28.

Les fibres 24 sont des fibres naturelles, de préférence des fibres naturelles recyclées.

En variante, les fibres naturelles 24 sont des fibres naturelles vierges, c'est-à-dire des fibres n'ayant pas servies au préalable à la fabrication d'un autre produit.

Dans un mode de réalisation préféré, les fibres naturelles 24 proviennent par exemple des résidus de fibres naturelles provenant de chutes 40 de NFPP engendrées lors de la fabrication du support rigide 12 selon un procédé de fabrication en NFPP.

Les fibres naturelles 24 sont par exemple choisies parmi le lin, le chanvre, le kenaf, le coco, le sisal, l'henequen, le jute et/ou le bois.

Le polymère thermoplastique 26 est choisi parmi un polymère biosourcé, de préférence un acide polylactique, ou un polymère synthétique, de préférence du polypropylène.

Dans le mode de réalisation préféré dans lequel des chutes 40 de NFPP sont recyclées, le polymère thermoplastique 26, ici du polypropylène, est à l'état fondu mélangé avec les fibres naturelles 24.

En variante, le polymère thermoplastique 26 se présente sous forme de fibres vierges. Les fibres naturelles 24 et le polymère thermoplastique 26 sont mélangés.

Les fibres 24 et le polymère thermoplastique 26 ont été broyés afin de former un ensemble 25 de particules présentant chacune une taille sensiblement comprise entre 0,1 mm et 3,2 mm, de préférence entre 0,5 mm et 3 mm.

La taille d'une particule désigne la plus grande dimension de la particule. Par exemple, dans le cas d'une particule allongée, telle une fibre, la taille désigne la longueur de la particule.

Selon un mode de réalisation particulier, l'ensemble 25 de particules est constitué uniquement des fibres naturelles 24 et du polymère thermoplastique 26.

L'ensemble 25 de particules comprenant les fibres 24 et le polymère thermoplastique 26 représentent 10 à 70% de la masse de la couche principale 22, notamment de 40 à 70% de la masse de la couche principale 22.

L'ensemble 25 de particules comprend par exemple entre 40 et 90% de fibres 24 et entre 10 et 60% de polymère thermoplastique 26. L'ensemble 25 de particules comprend, notamment, sensiblement 50% de fibres 24 et 50% de polymère thermoplastique 26, ce qui correspond aux proportions habituellement choisies lors de la fabrication d'un support rigide en NFPP. L'agent liant 28 a pour rôle de lier les fibres naturelles 24 avec le polymère thermoplastique 26.

L'agent liant 28 est par exemple en latex.

Dans un mode de réalisation, l'agent liant 28 est une résine polyuréthane, plus particulièrement d'origine naturelle, comme par exemple à base d'une huile naturelle polyol. Une résine polyuréthane offre l'avantage de posséder de bonnes propriétés de vieillissement.

Dans un autre mode de réalisation, l'agent liant 28 est une résine acrylique ou polyoléfine.

L'agent liant 28 représente 2 à 90 %, de préférence de 2 à 50 %, et de préférence 20 à 40%, de la masse de la couche principale 22.

La proportion d'agent liant 28 est choisie de sorte à assurer les caractéristiques mécaniques de la couche principale 22, tout en restant le plus faible possible afin d'optimiser la proportion de l'ensemble 25 comprenant les fibres naturelles 24 et le polymère thermoplastique 26.

Une couche principale 22 dans laquelle l'ensemble 25 représente plus de 70% de la masse de ladite couche principale 22 n'aurait pas les propriétés mécaniques souhaitées, notamment en termes de résistante mécanique.

Le mélange comprenant l'ensemble 25 de particules et de l'agent liant 28 a été ensuite compressé afin de former la couche principale 22.

Par exemple, ledit mélange a été laminé afin de former une couche principale 22 d'épaisseur comprise entre 0,4 et 1,5 mm.

Avant compression, la masse surfacique de l'ensemble 25 comprenant des fibres naturelles 24 et du polymère thermoplastique 26 mélangé avec l'agent liant 28 est par exemple comprise entre 50 et 400 g/m².

La composition de la couche principale 22 comprend avantageusement également des pigments et/ou des additifs 29.

Les pigments permettent de colorer la couche principale 22 d'une couleur souhaitée et d'améliorer l'aspect de celle-ci

Les pigments se présentent par exemple sous forme de poudre qui est mélangée avec l'agent liant 28.

Les pigments sont préférablement d'origine naturelle, plus particulièrement extraits de plantes tinctoriales.

Les pigments représentent moins de 10 % de la masse de la couche principale 22.

Les additifs 29 sont par exemple des additifs synthétiques pulvérisés sur la couche principale 22 avant compression.

Les additifs 29 ont avantageusement pour rôle d'augmenter la résistance aux UV, aux produits chimiques et à l'abrasion.

Les additifs 29 représentent moins de 10 % de la masse de la couche principale 22.

La couche principale 22 peut également contenir l'un ou plusieurs des composants suivants : des graisses, des composants destinés à retenir les graisses, et un agent liant en caoutchouc.

Avantageusement, lesdits composants sont d'origine naturelle.

La couche principale 22 définit une surface supérieure 30 définissant une surface visible de la couche de revêtement 14 et une surface inférieure 32.

La compression de la couche principale 22 permet de donner à la surface supérieure 30 un aspect lisse.

Optionnellement, la surface supérieure 30 est poncée, afin de lui donner un aspect rugueux.

Avantageusement, la couche de revêtement 14 comprend un film de protection 34 fixé sur la surface supérieure 30 de la couche principale 22.

Le film de protection 34 forme la surface supérieure 16 de la couche de revêtement 14 et définit donc une surface visible de la couche de revêtement 14.

Le film de protection 34 est en polyuréthane, et préférablement en polyuréthane d'origine naturelle.

En variante, le film de protection 34 est en polyuréthane thermoplastique, préférablement d'origine naturelle.

Le film de protection 34 peut également contenir des pigments et/ou additifs, par exemple destinés à protéger contre les UV ou l'abrasion.

Le film de protection 34 peut être transparent, translucide ou opaque, selon l'aspect extérieur souhaité.

Par exemple, un film de protection 34 opaque donne un aspect esthétique lisse monochrome, par exemple dû à la présence de pigments dans la composition du film de protection 34. Les particules de l'ensemble 25 de particules ne sont pas visibles.

Un film de protection 34 translucide ou transparent permet de laisser apparent l'aspect de la couche principale 22. On obtient un aspect extérieur avec les particules de l'ensemble 25 de particules visibles. L'aspect visible des particules peut également être amplifié ou atténué en choisissant un agent liant 28 plus ou moins translucide ou opaque.

Le film de protection 34 peut être fixé sur la surface supérieure 30 de la couche principale 22 par collage, par coulage ou par pulvérisation du film de protection 34 directement sur la surface supérieure 30 de la couche principale 22.

Le film de protection 34 peut être constitué d'une seule couche ou d'un empilement de couches ayant chacune une fonctionnalité différente.

Par exemple, le film de protection 34 peut être constitué d'une couche supérieure contenant des additifs destinés à protéger contre les UV, d'une couche centrale contenant des pigments et une couche inférieure contenant des additifs destinés à faciliter la liaison avec la couche principale 22.

Avantageusement, la couche de revêtement 14 comprend également une couche souple 38 offrant l'avantage de rendre la couche de revêtement 14 plus moelleuse au toucher pour les passagers.

La couche souple 38 est par exemple une couche de mousse en polyuréthane ou un tissu.

La couche souple 38 comprend de préférence de mousse de polyuréthane recyclée 39 mélangée à une résine 41 de polytéréphtalate d'éthylène (PET).

Selon un mode de réalisation particulier de l'invention, la couche souple 38 est constituée uniquement de mousse en polyuréthane recyclée mélangée à une résine 41 de polytéréphtalate d'éthylène (PET).

Des résidus de mousse recyclée 39 ont été broyés de préférence pour avoir des particules 45 de taille inférieure à 12mm, et de préférence inférieure à 5mm. De préférence, au moins 60% du volume des particules 45 de mousse broyée ont une taille comprise entre 1 et 3 mm.

Les particules 45 de mousse broyée comprennent un mélange de 20 à 95% de polyuréthane recyclé broyé et de 5 à 80% de polytéréphtalate d'éthylène broyé.

La couche souple 38 présente avantageusement une épaisseur comprise entre 0,5 mm et 6 mm.

La couche souple 38 a de préférence une masse volumique comprise entre de 30 à 70 kg/m3 et par exemple égale à 50 kg/m3.

La couche souple 38 présente de préférence une résistance à la traction supérieure à 200 kPa et une contrainte en compression, définie selon la norme ISO 3386-1 (version du 1^{er} octobre 2015), comprise entre 15 kPa et 40 kPa. La couche de revêtement 14 comprend également au moins une couche de support 36, 37 ayant une résistance mécanique supérieure à la couche principale 22.

Comme illustré sur la figure 1, la couche de revêtement 14 comprend par exemple deux couches de support 36, 37. Une première couche de support 36 est fixée sur le support rigide 12 sous la couche souple 38 et une deuxième couche de support 37 est fixée entre la couche souple 38 et la couche principale 22.

En variante, la couche de revêtement 14 comprend uniquement la première couche de support 36 fixée sur le support rigide 12 sous la couche souple 38 ou uniquement une deuxième couche de support 37 fixée entre la couche souple 38 et la couche principale 22

Chaque couche de support 36, 37 a une résistance mécanique supérieure à la couche principale 22. Face à une sollicitation extérieure, la ou les couche(s) de support 36, 37 sont aptes à résister plus longtemps et à une sollicitation plus élevée sans se déformer ou se rompre que la couche principale 22.

Chaque couche de support 36, 37 a de préférence une résistance à la traction comprise entre 50 et 130 N.

La ou les couches de support 36, 37 ont pour rôle de rigidifier la couche de revêtement 14 afin d'améliorer les performances mécaniques de la couche de revêtement 14.

La première couche de support 36 fixée sur le support rigide 12 permet également de faciliter le placage de la couche de revêtement 14 contre le support rigide 12.

Chaque couche de support 36, 37 est par exemple fabriquée en matériau composite comprenant des fibres non-tissées dans un polymère, plus particulièrement dans un polyethersulfone ou un polyamide.

Les fibres sont de préférence d'origine naturelle et avantageusement sont des fibres recyclées. Les fibres naturelles comprises dans la couche de support 36 présentent une longueur moyenne comprise entre 20 mm et 90 mm, et de préférence sensiblement égale à 60 mm.

La première couche de support 36 est par exemple collée sur le support rigide 12 et sur la couche souple 38. La deuxième couche de support 37 est par exemple collée d'un côté sur la couche souple 38 et de l'autre la surface inférieure 32 de la couche principale 22.

Un procédé de fabrication d'un tel élément de garnissage 10 va maintenant être décrit.

Tout d'abord, le support rigide 12 est fabriqué en matériau composite comprenant des fibres naturelles et de préférence fabriqué selon un procédé de fabrication en NFPP ("Natural Fiber Polypropylene"), c'est-à-dire par compression d'un mat comprenant de fibres naturelles enchevêtrées avec des fibres de polypropylène.

La fabrication du support rigide 12 selon ce procédé de fabrication engendre des chutes de pièces 40 en NFPP. Des chutes de pièces en NFPP provenant de restes de fabrication d'autres pièces du véhicule fabriquées dans la même installation de production ou sur un autre site de production peuvent également être fournis.

Les chutes de pièces 40 en NFPP comprennent alors des fibres naturelles 24 et du polymère thermoplastique 26 à l'état fondu.

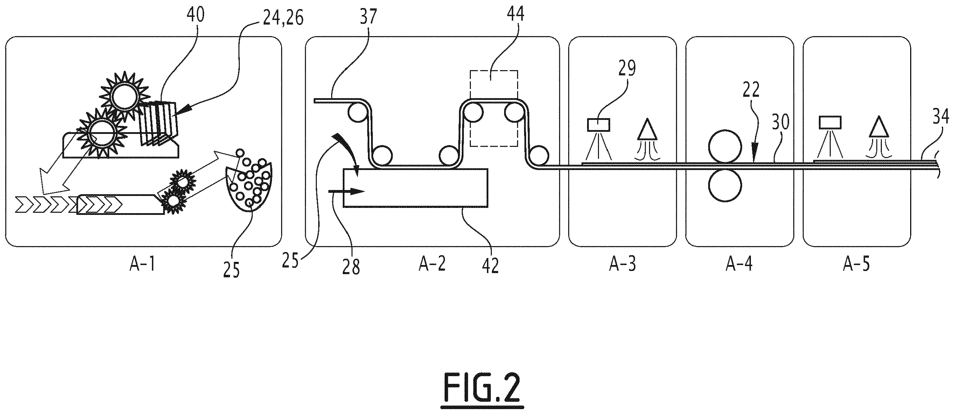

La figure 2 illustre un premier procédé de fabrication de la couche principale 22 dans le cas où l'agent liant 28 est une résine polyuréthane. Les fibres naturelles 24 et le polymère thermoplastique 26 sont fournis, et avantageusement sous la forme des chutes de pièces 40 en NFPP.

Les chutes de pièces 40 en NFPP sont broyées de sorte à obtenir un ensemble 25 constitué de particules ayant chacune une taille sensiblement comprise entre 0,1 mm et 3,2 mm, de préférence entre 0,5 mm et 3 mm.

Comme illustré sur l'étape A-1 de la figure 2, les chutes de pièces 40 subissent avantageusement deux étapes de broyages successifs, par exemple un premier broyage grossier et un deuxième broyage plus fin.

Un système comprenant des tamis permet après broyage de récupérer les particules de taille souhaitée. Par exemple, un premier tamis est calibré pour laisser passer les particules de tailles inférieures à 3,2 mm et un deuxième tamis installé sous le premier tamis est calibré pour laisser passer les particules de tailles inférieures à 0,1 mm. Les particules laissées passées par le premier tamis mais arrêtées par le deuxième tamis ont ainsi une taille comprise entre 0,1 et 3,2 mm et sont récupérées pour la fabrication de l'élément de garnissage.

Comme illustré sur l'étape A-2 de la figure 2, l'ensemble 25 comprenant des fibres 24 et du polymère thermoplastique 26 est ensuite mélangé avec l'agent liant 28, ici de la résine polyuréthane dans un réservoir 42.

Optionnellement, des pigments et des additifs sont également ajoutés dans le réservoir 42.

Optionnellement, un solvant est également ajouté dans le réservoir 42 pour mélanger les différents éléments présents dans celui-ci. Le solvant est par exemple à base aqueuse ou organique.

Un support, avantageusement la deuxième couche de support 37, est fourni. Ledit support est ensuite imprégné du mélange de l'ensemble 25 et de l'agent liant 28 en étant trempé dans le réservoir 42, et est finalement séché dans un four 44.

Selon ce procédé de fabrication particulier, la couche principale 22 et la couche de support 37 sont confondues et ne forment pas deux couches distinctes l'une de l'autre. La couche de support 37 est imprégnée de la couche principale 22.

Comme illustré sur l'étape A-3 de la figure 2, l'agent liant 28 sous forme de résine et optionnellement d'additifs 29, de préférence également sous forme de résine, peuvent ensuite être pulvérisés, par exemple pour former une couche de protection contre les UV. La couche ainsi formée est ensuite séchée.

Comme cela est illustré sur l'étape A-4 de la figure 2, la couche ainsi formée est compressée afin de former la couche principale 22 d'une épaisseur comprise entre 0,4 et 1,5 mm.

L'étape de compression est par exemple réalisée par laminage, par calandrage continu ou au moyen d'une presse statique.

Lors de cette étape de compression, des motifs peuvent être ménagés sur la couche principale 22 par un procédé de gravure ou de gaufrage.

La compression de la couche principale 22 permet de donner à la surface supérieure 30 un aspect lisse.

Optionnellement, la surface supérieure 30 est poncée, afin de lui donner un aspect rugueux.

Optionnellement, comme illustré sur l'étape A-5 de la figure 2, un film de protection 34 est ensuite pulvérisé directement sur la surface supérieure 30 de la couche principale 22.

En variante non représenté, le film de protection 34 est collé ou injecté directement sur la surface supérieure 30 de la couche principale 22.

Une couche support 36 de résistance mécanique supérieure à la couche principale 22 est ensuite optionnellement fournie.

Avantageusement, chaque étape du procédé de fabrication de la couche principale 22 est réalisée à une température inférieure à la température de fusion du polymère thermoplastique 26, afin d'obtenir une couche principale 22 souple et non cassante.

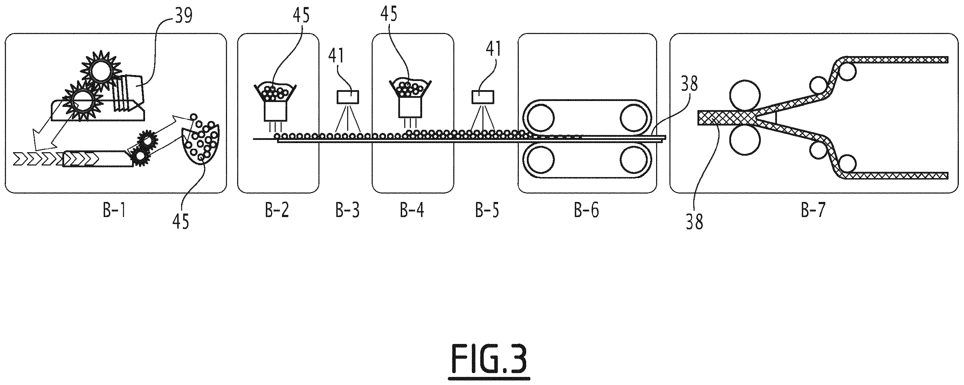

La figure 3 illustre un procédé de fabrication de la couche souple 38.

La mousse polyuréthane, et de préférence des résidus 39 de mousse polyuréthane recyclée, sont broyés de sorte à obtenir des particules 45 de dimension moyenne inférieure à 12mm, et de préférence inférieure à 5mm. De préférence, au moins 60% du volume des particules 45 de mousse broyée ont une dimension moyenne comprise entre 1 et 3 mm.

Les particules 45 de mousse broyée comprennent un mélange de 20 à 95% de polyuréthane recyclé broyé er de 5 à 80% de polytéréphtalate d'éthylène broyé.

Les particules 45 de mousse broyée et de la résine 41, de préférence de polytéréphtalate d'éthylène (PET) sont ensuite mélangés.

Par exemple, comme illustré sur l'étape B-2 de la figure 3, les particules 45 de mousse broyée sont ensuite éparpillées sur un support, avantageusement la couche de support 36 qui a été fournie en amont.

A la suite de cette étape B-2 d'éparpillement, la résine, de préférence de polytéréphtalate d'éthylène (PET), est mélangée aux particules 45 de mousse broyée par pulvérisation, comme illustré sur l'étape B-3 de la figure 3.

Avantageusement, ces deux étapes sont répétées une deuxième fois et forment ainsi la couche souple 38.

La couche souple 38 est ensuite laminée à chaud afin de lier les deux couches ensemble et de réduire l'épaisseur de ces deux couches.

Comme illustré sur l'étape B-7 de la figure 3, la couche souple 38 est ensuite coupée selon une direction perpendiculaire à une direction d'épaisseur de la couche souple 38, afin d'obtenir deux couches souples 38 avec une épaisseur comprise entre 0,5 et 6 mm.

Une des couches souples 38 ainsi obtenues est ensuite laminée à chaud avec une couche de support 36 afin de lier les deux couches ensemble et de réduire l'épaisseur de ces deux couches.

La couche souple 38 liée à la couche de support 36 est ensuite collée à la couche de support 37 ou directement sur la surface inférieure 32 de la couche principale 22, formant ainsi la couche de revêtement 14.

La couche de revêtement 14 ainsi obtenue est ensuite fixée sur le support rigide 12, par exemple par collage.

En variante, le support rigide 12 est surmoulé sur la couche de revêtement 14.

La couche de revêtement 14 ainsi créée présente l'avantage d'être flexible et de posséder une haute teneur en composants d'origine naturelle et avantageusement recyclés.

L'élément de garnissage 10 ainsi fabriqué est économique et respectueux pour l'environnement grâce à l'utilisation dans la fabrication de la couche de revêtement 14 des résidus de fibres naturelles non-utilisés lors de la fabrication du support rigide 12 ou provenant de restes de fabrication d'autres pièces du véhicule fabriquées dans la même installation de production ou sur un autre site de production.

De plus, la couche de revêtement 14 offre un aspect extérieur satisfaisant, avec par exemple la possibilité de présenter un aspect extérieur naturel.

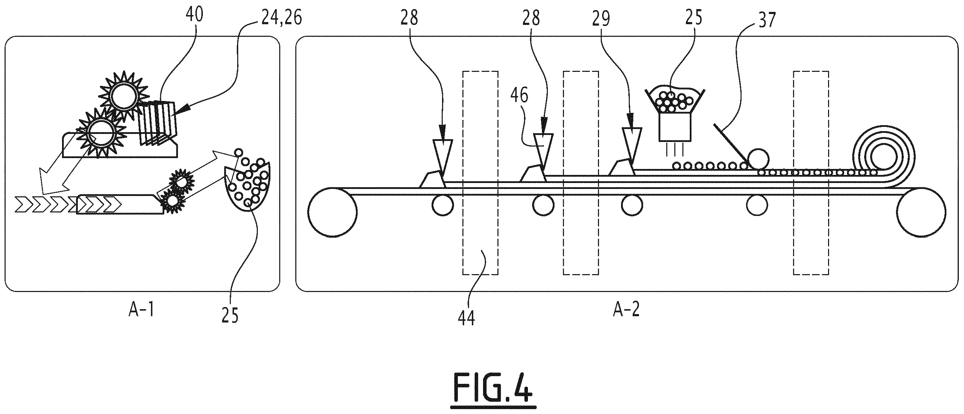

Selon un autre mode de réalisation, la couche principale 22 est fabriquée selon un procédé de fabrication illustré sur la figure 4. Comme pour le procédé précédent, l'agent liant 28 est une résine polyuréthane.

A la différence du procédé de la figure 2, l'ensemble 25 est mélangé à l'agent liant 28, par éparpillement de l'ensemble 25 comprenant des fibres naturelles 24 et du polymère thermoplastique 26 sur un support formé par l'agent liant 28.

L'éparpillement est par exemple réalisé à l'aide d'un dispositif composé d'au moins une brosse en forme de rouleau pivotante sur elle-même.

Le support formé par l'agent liant 28 est par exemple fabriqué par dépôt successif d'agent liant 28 sous forme de résine et optionnellement d'additif sous forme de résine. Comme illustré sur la figure 4, l'épaisseur de résine déposée est, par exemple, contrôlée par un étalage à l'aide d'un couteau 46. Un dépôt de résine est toujours suivi par une étape de séchage dans un four 44 avant le dépôt de résine suivant.

La couche ainsi formée est ensuite compressée, et de préférence laminée à chaud avec la deuxième couche de support 37.

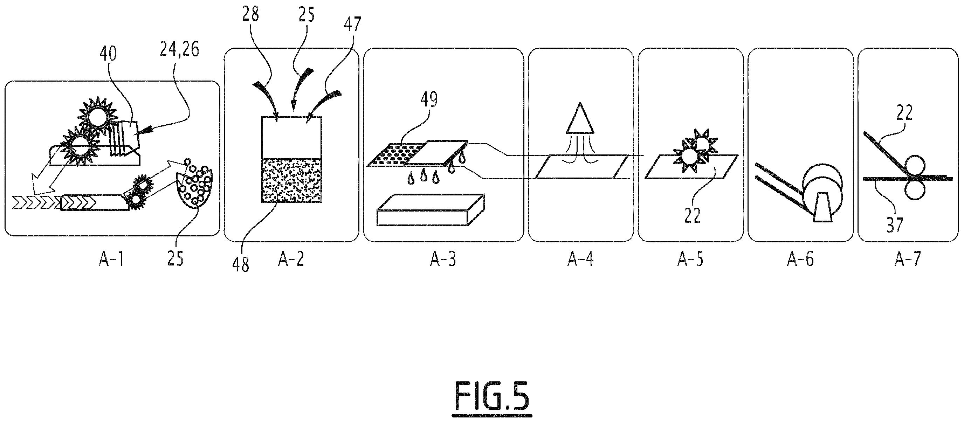

Selon un autre mode de réalisation dans le cas où l'agent liant 28 est une résine acrylique ou polyoléfine, la couche principale 22 est fabriquée selon un troisième procédé de fabrication illustré sur la figure 5.

Après l'étape A-1 de broyage, l'ensemble 25 comprenant des fibres naturelles 24 et du polymère thermoplastique 26 est mélangé avec l'agent liant 28 et de l'eau 47 dans un agitateur automatique 48, comme cela est illustré sur l'étape A-2 de la figure 5.

Le mélange ainsi formé est ensuite essoré, par exemple en le transportant sur un convoyeur perforé 49, comme illustré sur l'étape A-3 de la figure 5.

Comme cela est représenté sur les étapes A-4 et A-5 de la figure 5, la couche est ensuite séchée, puis assouplie et polie afin d'ajuster l'épaisseur et ainsi obtenir la couche principale 22 souhaitée.

La couche principale 22 est ensuite enroulée puis compressée par laminage en pression et température sur la couche de support 37, comme illustré sur les étapes A-6 et A-7 de la figure 5.

En variante non représentée, le procédé de fabrication de la couche principale 22 comprend également une étape supplémentaire d'orientation des particules de l'ensemble 25 de particules.

Les particules sont avantageusement orientées dans une direction sensiblement parallèle ou sensiblement perpendiculaire à l'épaisseur de la couche principale 22.

Les particules sont par exemple orientées par un procédé utilisant l'énergie statique ou un voltage élevé, ou par un procédé d'hydro-enchevêtrement.

Une telle orientation des particules permet de de donner à la surface supérieure 30 un aspect à fibres apparentes, semblable à un cuir suédé.

## Revendications

1. Elément de garnissage de véhicule comprenant au moins une couche de revêtement (14) comprenant une couche principale (22) d'une composition comprenant au moins :
- des fibres (24) ;
- un polymère thermoplastique (26) ; et
- un agent liant (28), ledit agent (28) liant les fibres (24) et le polymère thermoplastique (26) ;
**caractérisé en ce que** les fibres (24) sont des fibres naturelles, les fibres (24) et le polymère thermoplastique (26) étant broyés de sorte à former un ensemble de particules (25) ayant chacune une taille sensiblement comprise entre 0,1 et 3,2 mm ; l'ensemble de particules (25) étant mélangé et compressé avec l'agent liant (28), l'ensemble (25) comprenant les fibres (24) et le polymère thermoplastique (26) représente 10 à 70% de la masse de la couche principale (22), l'agent liant (28) représente 2 à 90 %, et de préférence 20 à 40%, de la masse de la couche principale (22).

2. Elément de garnissage selon la revendication 1, dans lequel la couche principale (22) de la couche de revêtement (14) présente une épaisseur sensiblement comprise entre 0,4 et 1,5 mm.

3. Elément de garnissage selon la revendication 1 ou 2, dans lequel les fibres (24) sont des fibres naturelles recyclées.

4. Elément de garnissage selon l'une quelconque des revendications précédentes, dans lequel l'agent liant (28) est choisi parmi une résine polyuréthane, une résine acrylique et une résine polyoléfine.

5. Elément de garnissage selon l'une quelconque des revendications précédentes, dans lequel le polymère thermoplastique (26) est choisi parmi un polymère biosourcé, de préférence un acide polylactique, ou un polymère synthétique, de préférence du polypropylène.

6. Elément de garnissage selon l'une quelconque des revendications précédentes, dans lequel la couche de revêtement (14) comprend au moins une couche de support (36, 37) ayant une résistance mécanique supérieure à la couche principale (22).

7. Elément de garnissage selon l'une quelconque des revendications précédentes, dans lequel la couche de revêtement (14) comprend une couche souple (38) comprenant de la mousse de polyuréthane recyclée mélangée à une résine de polytéréphtalate d'éthylène.

8. Elément de garnissage selon l'une quelconque des revendications précédentes comprenant un support rigide (12), la couche de revêtement (14) recouvrant au moins une partie du support rigide (12).

9. Procédé de fabrication d'un élément de garnissage comprenant les étapes suivantes :
- fourniture de fibres naturelles (24) et d'un polymère thermoplastique (26);
- broyage des fibres naturelles (24) et du polymère thermoplastique (26), de sorte à obtenir un ensemble de particules (25) ayant chacune une taille sensiblement comprise entre 0,1 et 3,2 mm ;
- fourniture d'un agent liant (28) sous forme de résine ;
- mélange de l'ensemble de particules (25) avec l'agent liant (28) ; et
- compression de l'ensemble de particules (25) avec l'agent liant (28) afin de former une couche principale (22) d'une couche de revêtement (14) de l'élément de garnissage (10).

10. Procédé de fabrication selon la revendication 9, comprenant une étape supplémentaire de fabrication d'une couche souple (38) comprenant les sous-étapes suivantes :
- broyage de résidus de mousse polyuréthane recyclés, de sorte à obtenir des particules (45) de taille inférieure à 12mm, et de préférence inférieure à 5mm ; et
- mélange des particules (45) avec de la résine de polytéréphtalate d'éthylène.
